# EUROPÄISCHE PATENTSCHRIFT

(11) **EP 1 361 130 B1**
(45) Veröffentlichungstag und Bekanntmachung des Hinweises auf die Patenterteilung: **27.04.2005**
(21) Anmeldenummer: 03010299.0
(22) Anmeldetag: 07.05.2003
(51) Int. Cl.: B60T 17/00

(54) **Druckluftaufbereitungseinrichtung für Kfz-Druckluftanlagen**
Compressed air processing device for vehicle air system
Dispositif de traitement du air pour une installation à air comprimé de véhicle

(30) Priorität: 10.05.2002 DE 10220790
(43) Veröffentlichungstag der Anmeldung: 12.11.2003
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- DE-A- 4 421 575
- DE-C- 19 544 621
- DE-C- 19 649 498

## Beschreibung

Die Erfindung betrifft eine Druckluftaufbereitungseinrichtung mit einem Druckregler mit Auslassventil, einem Lufttrockner und einem Mehrkreisschutzventil, das für jeden Kreis ein Überströmventil mit begrenzter Rückströmung aufweist, und mit mindestens einem Magnetventil zum willkürlichen Betätigen des Überströmventils.

Eine Druckluftaufbereitungseinrichtung ist aus der DE 44 21 575 C2 bekannt. In dieser Druckluftaufbereitungseinrichtung sind in einem gemeinsamen Gehäuse ein Druckregler mit einem Auslassventil, ein Lufttrockner und ein Mehrkreisschutzventil untergebracht. Der Druckregler steuert mit Hilfe des Auslassventils die Lastlaufphase und die Leerlaufphase. Der Lufttrockner dient zur Entnahme von Feuchtigkeit aus der von dem Kompressor herangeführten Druckluft. Das Mehrkreisschutzventil weist eine Reihe von Überströmventilen mit begrenzter Rückströmung auf. In der Regel ist für je einen Kreis je ein solches Überströmventil vorgesehen. Jedem Überströmventil ist wiederum ein Magnetventil zugeordnet, das zum willkürlichen Betätigen des Überströmventils dient. Jedes Magnetventil wird über die Zentralbelüftung mit Druckluft versorgt und besitzt eine eigene Entlüftung, die in stromlosem Zustand des Magnetventils geschlossen ist. Für die Regeneration des Lufttrockners ist ein eigener Regenerationskreis vorgesehen, in welchem ein weiteres Magnetventil untergebracht ist, von dem eine Regenerationsleitung ein zur Zentralbelüftung führendes Rückschlagventil überbrückt und damit rückwärts durch den Lufttrockner bis zum Auslass des Auslassventils führt. Das eingesetzte Magnetventil des Regenerationskreises ist stromlos geschlossen, so dass die Regenerationsleitung über die eigene Entlüftung an die Atmosphäre angeschlossen ist. Zur Verhinderung eines fortwährenden Luftabflusses ist in der Regenerationsleitung das das Ausströmen behindernde Rückschlagventil angeordnet. Es ist auch bereits bekannt, den beiden Betriebsbremskreisen nur ein gemeinsames Magnetventil zuzuordnen, dessen Steuerleitung zu den beiden Überströmventilen der beiden Bremskreise führt. Die bekannte Druckluftaufbereitungseinrichtung erfordert den Einsatz einer großen Anzahl von Magnetventilen und ist daher entsprechend aufwändig.

Auch die DE 195 44 621 zeigt eine derartige Druckluftaufbereitungseinrichtung für Kraftfahrzeug-Druckluftanlagen mit einem Druckregler, einem Lufttrockner und einem Mehrkreisschutzventil, die eine gemeinsame Baueinheit bilden. Jedem Kreis ist ein Überströmventil mit begrenzter Rückströmung zugeordnet. Jedes Überströmventil weist eine bewegliche Wand auf, die einen Anströmraum von einem Rückraum mit Feder abteilt. Der Anströmraum ist mit dem Rückraum über eine Umgehungsleitung verbunden, in der ein elektrisch ansteuerbares Magnetventil mit eigener Entlüftung angeordnet ist. Das Magnetventil ist stromlos geschlossen, sperrt also die Verbindung in der Umgehungsleitung ab, während es bei Erregung die Verbindung herstellt und den Entlüftungsanschluss absperrt. Auch hier ist eine Möglichkeit für die Regeneration des Trockners vorgesehen. In einer Regenerationsleitung ist ein gesondertes Magnetventil angeordnet.

Der Erfindung liegt die Aufgabe zugrunde, eine Druckluftaufbereitungseinrichtung der eingangs beschriebenen Art so weiterzubilden, dass der bauliche Aufwand und insbesondere die Anzahl der eingesetzten Magnetventile reduziert wird, ohne dass die wesentlichen Funktionen einer solchen Druckluftaufbereitungseinrichtung verlorengehen. Es soll insbesondere weiterhin möglich sein, einzelne Kreise bevorzugt zu befüllen, den Luftaustausch zwischen einzelnen Kreisen zu ermöglichen, die Überströmventile der einzelnen Kreise zu steuern und auch weiterhin die Regeneration des Lufttrockners zu ermöglichen.

Erfindungsgemäß wird dies dadurch erreicht, dass das Magnetventil zum willkürlichen Betätigen des Überströmventils zugleich als Steuerventil für die Steuerung einer Regenerationsphase ausgebildet ist und dass eine zum Auslassventil führende Regenerationsleitung an das Magnetventil angeschlossen ist.

Die Erfindung geht von dem Gedanken aus, die Steuerung zumindest eines Überströmventils mit der Steuerung der Regenerationsphase zusammenzufassen und dafür nur ein einziges Magnetventil vorzusehen. Damit werden nicht nur gleichartige Steuerkreise über ein Magnetventil zusammengefasst, sondern es werden ungleichartige Funktionen bei der Anordnung eines gemeinsamen Magnetventils zusammengefasst, und zwar derart, dass eine gemeinsame Betätigung jeweils eine der Funktionen nicht stört oder nicht negativ beeinflusst. So ist es beispielsweise möglich, ein gemeinsames Magnetventil für die Ansteuerung der beiden Überströmventile der Bremskreise I und II und zugleich für die Steuerung der Regenerationsphase einzusetzen. Da ohnehin ein weiteres Magnetventil, welches das Auslassventil des Druckreglers steuert, erforderlich ist, kann das gemeinsame Magnetventil sich während der Leerlaufphase des Kompressors, also bei geöffnetem Auslassventil, sinnvoll für eine Regeneration herangezogen werden, während in der Lastlaufphase mit dem gleichen Signal des gemeinsamen Magnetventils eine bevorzugte Befüllung der beiden Betriebsbremskreise möglich ist, ohne dass Luft verlorengeht. Es ist sogar möglich, neben dem dem Druckregler und dem Auslassventil zugeordneten Magnetventil nur noch ein einziges weiteres Magnetventil einzusetzen, mit dem sämtliche Überströmventile der betreffenden Kreise ansteuerbar sind, ebenso wie die Regenerationsphase.

Das Magnetventil kann zur direkten Steuerung der Regeneration über die Regenerationsleitung ausgebildet sein, wobei in der Regenerationsleitung nur ein in Regenerationsrichtung öffnendes Rückschlagventil angeordnet ist. Insoweit muss das Magnetventil so ausgebildet sein, dass es die erforderlichen Querschnitte für die Durchströmung in der Regenerationsphase zur Verfügung stellt. Diese Ausbildung ist zugleich sinnvoll für eine schnelle Ansteuerung der Überströmventile. Hier müssen nur entsprechend klein bemessene Wirkräume befüllt werden.

Andererseits besteht die weitere Möglichkeit, dass das Magnetventil zur indirekten Steuerung der Regeneration über die Regenerationsleitung ausgebildet ist, wobei in der Regenerationsleitung ein Relaisventil angeordnet ist. Dieses Relaisventil ist als 2/2-Wegeventil ausgebildet, also geeignet, zwei Stellungen einzunehmen und zwei Schaltzustände zu verwirklichen. Damit besteht die Möglichkeit, die Querschnitte des Magnetventils kleiner zu gestalten. Es reicht aus, wenn die Regenerationsleitung einen entsprechend bemessenen Querschnitt aufweist und die Regenerationsluft das Relaisventil überströmen kann.

Für die Ausbildung des Magnetventils kommen beide Möglichkeiten in Frage. Das Magnetventil kann so ausgebildet und geschaltet sein, dass es stromlos geschlossen ist, also die Verbindungsleitung zwischen der Zentralbelüftung und dem Wirkraum an der Wirkfläche des Überströmventils absperrt, so dass aus der Zentralbohrung keine Druckluft in die Atmosphäre verlorengeht, während andererseits in diesem stromlosen Zustand der Wirkraum der Wirkfläche des Überströmventils an die Atmosphäre angeschlossen ist. Dies gilt für Ausführungsformen von Überströmventilen, bei denen diese von dem Magnetventil angesteuerte Wirkfläche auf der gleichen Seite anströmseitig vorgesehen ist, wie die beiden Wirkflächen, die ansonsten anströmseitig vorgesehen sind und den Öffnungsdruck des Überströmventils sowie die Hysterese festlegen.

Andererseits kann aber auch ein Magnetventil eingesetzt werden, welches in stromlosem Zustand geöffnet ist. Stromlos ist dann die Entlüftungsöffnung zur Atmosphäre abgesperrt und in der Verbindungsleitung zwischen der Zentralbelüftung und der Wirkfläche an dem Überströmventil besteht Verbindung. Zu dieser Ausführungsform des Magnetventils gehört eine konstruktive Ausführungsform des Überströmventils, bei der die von dem Magnetventil beaufschlagte Wirkfläche auf der Seite des Federraums angeordnet ist, also nicht anströmseitig.

Besonders sinnvoll ist eine Ausführungsform, wenn das Magnetventil zur Ansteuerung der beiden Überströmventile der Kreise I und II der Betriebsbremse und zur Ansteuerung der Regeneration ausgebildet ist. Dabei sollte die von dem Magnetventil angesteuerte Wirkfläche an den beiden Überströmventilen anströmseitig angeordnet sein, wenn man stromlos geschlossene Magnetventile verwenden will. Es ist aber auch möglich, dass die von dem Magnetventil angesteuerte Wirkfläche an den beiden Überströmventilen abströmseitig angeordnet ist, und dass in der Regenerationsleitung ein Relaisventil angeordnet ist. Es empfiehlt sich somit, in der Regenerationsleitung ein Relaisventil anzuordnen, um die erforderlichen großen Querschnitte für die Regeneration zur Verfügung zu stellen. Bei dieser Ausführungsform fasst das gemeinsame Magnetventil die Funktionen dreier Magnetventile zusammen. Dieser Gedanke lässt sich sogar auf sämtliche Magnetventile an der Druckluftaufbereitungseinrichtung ausdehnen, mit Ausnahme des Magnetventils, welches das Auslassventil des Druckreglers steuert.

Sofern in der Regenerationsleitung ein Relaisventil angeordnet ist, kann dieses einen auf einer Feder abgestützten Kolben aufweisen, so dass das Relaisventil erst bei Überschreiten eines über die Feder festgelegten Mindestdruckes schaltet. Die Kraft der Feder kann einstellbar ausgebildet sein, um diesen Mindestdruck einstellen zu können. Damit wird sichergestellt, dass während des Druckaufbaus in der Druckluftaufbereitungseinrichtung unterhalb des Mindestdruckes eine Regeneration verhindert wird. Auch in anderen Fällen kann es sinnvoll sein, eine Regeneration unterhalb eines Mindestdruckes in der Zentralbelüftung zu vermeiden.

Die Erfindung wird anhand verschiedener Ausführungsbeispiele weiter erläutert und beschrieben. Es zeigen:
- Fig. 1: einen schematisierten Längsschnitt durch eine Druckluftaufbereitungseinrichtung mit einem gemeinsamen Magnetventil für die beiden Betriebsbremskreise und die Regeneration,
- Fig. 2: einen Längsschnitt durch eine weitere Ausführungsform der Druckluftaufbereitungseinrichtung mit einem Magnetventil, welches die Ansteuerung eines Betriebsbremskreises und die Regeneration ermöglicht, wobei in der Regenerationsleitung ein Relaisventil angeordnet ist,
- Fig. 3: einen Längsschnitt durch eine weitere Ausführungsform der Druckluftaufbereitungseinrichtung mit einem Magnetventil, welches zur Ansteuerung der Bremskreise I, II und III sowie der Regeneration dient,
- Fig. 4: eine weitere Ausführungsform der Druckluftaufbereitungseinrichtung mit einem Magnetventil, welches zur Ansteuerung des Überströmventils des Kreises III sowie der Regeneration zugeordnet ist, und
- Fig. 5: eine letzte Ausführungsform unter Verwendung eines Magnetventils zur indirekten Ansteuerung der Überströmventile der Betriebsbremskreise I und II sowie der Regeneration.

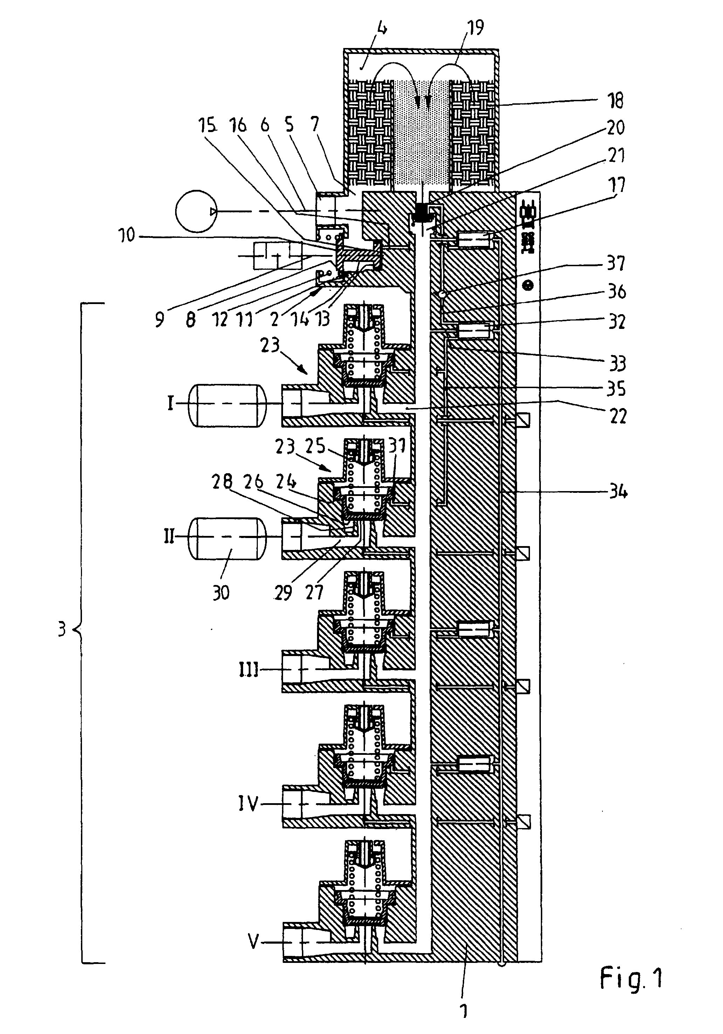

Bei der in Fig. 1 dargestellten Ausführungsform sind in einem gemeinsamen Gehäuse 1 die Elemente eines Druckreglers 2, eines Mehrkreisschutzventils 3 und eines Trockners 4 integriert angeordnet. Das Gehäuse 1 bzw. der Druckregler 2 weist einen Eingangsanschluss 5 auf, zu dem eine von einem Kompressor ausgehende Leitung 6 herangeführt ist. Der Eingangsanschluss 5 geht in einen Durchtrittsraum 7 über, an den einerseits ein gesteuertes Auslassventil 8 angeschlossen ist, welches zu einem in die Atmosphäre führenden Auslass 9 führt. Das gesteuerte Auslassventil 8 weist einen Ventilkörper 10 auf, der mit einem eingezogenen Rand 11 am Gehäuse 1 zusammenarbeitet und andererseits auf einer Feder 12 abgestützt ist. Dem Ventilkörper 10 ist ein Kolben 13 mit Stößel 14 zugeordnet. Zu einer Druckkammer 15 an dem Kolben 13 führt eine Leitung 16, in der ein Magnetventil 17 angeordnet ist, welches als 3/2-Wegeventil ausgebildet ist.

Andererseits verzweigt sich der Durchtrittsraum 7 im Bereich des Trockners 4 in einen Granulatraum 18, der in der Lastlaufphase von Druckluft in Richtung eines Pfeils 19 durchströmt wird. Am Ende des Durchtrittsraums 7 bzw. des Granulatraums 18 ist ein Rückschlagventil 20 vorgesehen, welches funktionsmäßig noch zu dem Druckregler 2 gehört bzw. das Ende des Druckreglers 2 darstellt. Das Rückschlagventil 20 ist als normales Rückschlagventil ausgebildet, d. h. sein Ventilkörper ist auf einer vergleichsweise schwach bemessenen Feder abgestützt. Das Rückschlagventil öffnet in einen Einströmraum 21, der zuweilen auch als Zentralbelüftung bezeichnet wird und funktionsmäßig zu dem Mehrkreisschutzventil 3 gehört. Die Leitung 16 zu dem Magnetventil 17 der Betätigungseinrichtung des gesteuerten Auslassventils 8 des Druckreglers ist an den Einströmraum 21 angeschlossen.

Zu jedem Kreis I, II, III, IV und V führt je eine Verbindungsleitung 22, die von dem Einströmraum 21 abzweigt. Für jeden Kreis ist dort ein Überströmventil 23 mit begrenzter Rückströmung vorgesehen. Dieses Überströmventil besitzt einen Stufenkolben 24, der gleitend und abgedichtet im Gehäuse 1 geführt ist und der auf einer Feder 25 abgestützt ist, die in ihrer Kraft eingestellt werden kann. Der Stufenkolben 24 besitzt eine erste ringförmige Wirkfläche 26, die in dauernder Verbindung zu der Verbindungsleitung 22 steht und die in Verbindung mit der Kraft der Feder den Öffnungsdruck des Überströmventils festlegt. Auf der gleichen Seite des Stufenkolbens 24 ist eine zweite Wirkfläche 27 vorgesehen, wobei ein Durchlassventil mit einem eingezogenen Rand 28 gebildet wird. Von dort führt eine Leitung 29 zu einem Vorratsbehälter 30 des betreffenden Kreises. Der Stufenkolben 24 weist eine dritte Wirkfläche 31 auf, die hier auf der gleichen Seite wie die anderen Wirkflächen 26 und 27 anströmseitig vorgesehen ist.

Den beiden Überströmventilen 23 der beiden Betriebsbremskreise I und II ist ein gemeinsames Magnetventil 32 zugeordnet, welches als 3/2-Wegeventil ausgebildet ist. Dieses Magnetventil 32 ist in stromlosem Zustand geschlossen, wie in Fig. 1 dargestellt. Es hat über eine Leitung 33 Verbindung zu dem Einströmraum 21 und schließt diesen Eingang stromlos ab. Es verfügt über eine eigene Entlüftung über eine Entlüftungsleitung 34, die zur Atmosphäre führt. Von dem Magnetventil 32 führt eine gemeinsame Steuerleitung 35 zu der jeweiligen Wirkfläche 31 an den beiden Überströmventilen 23 der Betriebsbremskreise I und II. Damit ist bereits erkennbar, dass in erregtem Zustand des gemeinsamen Magnetventils 32 die Stufenkolben 24 der beiden Überströmventile 23 auf ihrer dritten Wirkfläche 31 mit Druckluft beaufschlagt werden, so dass abhängig von diesem Steuersignal eine zusätzliche Öffnungskraft auf die Überströmventile 23 ausgeübt werden kann, die zu einem Öffnungsvorgang genutzt werden kann.

Von dem gemeinsamen Magnetventil 32 führt weiterhin eine Regenerationsleitung 36 unter Umgehung des Rückschlagventils 20 zurück in den Bereich des Lufttrockners. In dieser Regenerationsleitung 36 ist ein Rückschlagventil 37 angeordnet, welches in Rückströmrichtung öffnet, also in der Regenerationsphase Druckluft rückwärts durch den Trockner 4 strömen lässt, die dann bei geöffnetem Auslassventil 8 in die Atmosphäre abströmt und den Trockner 4 regeneriert. Da eine solche Regenerationsphase nur in der Leerlaufphase des Kompressors, also bei geöffnetem Auslassventil 8 durchgeführt wird, ist es zu diesem Zeitpunkt nicht erforderlich, auf eine bevorzugte Befüllung der Betriebsbremskreise I und II hinzuwirken. Demzufolge wird sich während einer solchen Regenerationsphase das Umschalten des Magnetventils 32 auf die Überströmventile 23 nicht nachteilig auswirken können. Umgekehrt ist in der Lastlaufphase das Auslassventil 8 geschlossen, so dass das beim Umschalten des Magnetventils 32 von diesem ausgehende Signal in der Regenerationsleitung 36 nicht zu einem Druckluftverlust führen kann. Es ist vielmehr sinnvoll genutzt, dass in diesem Falle die Überströmventile 23 geöffnet werden können, um eine bevorzugte Befüllung der Betriebsbremskreise I und II zu bewirken, was auch bei einem niedrigeren Druckniveau als normal geschehen kann. Der Kreis III kann der Anhängerbremse zugeordnet sein. Der Kreis IV dient der Versorgung von Nebenverbrauchern. Der Kreis V kann die Luftfederung des Zugfahrzeugs versorgen.

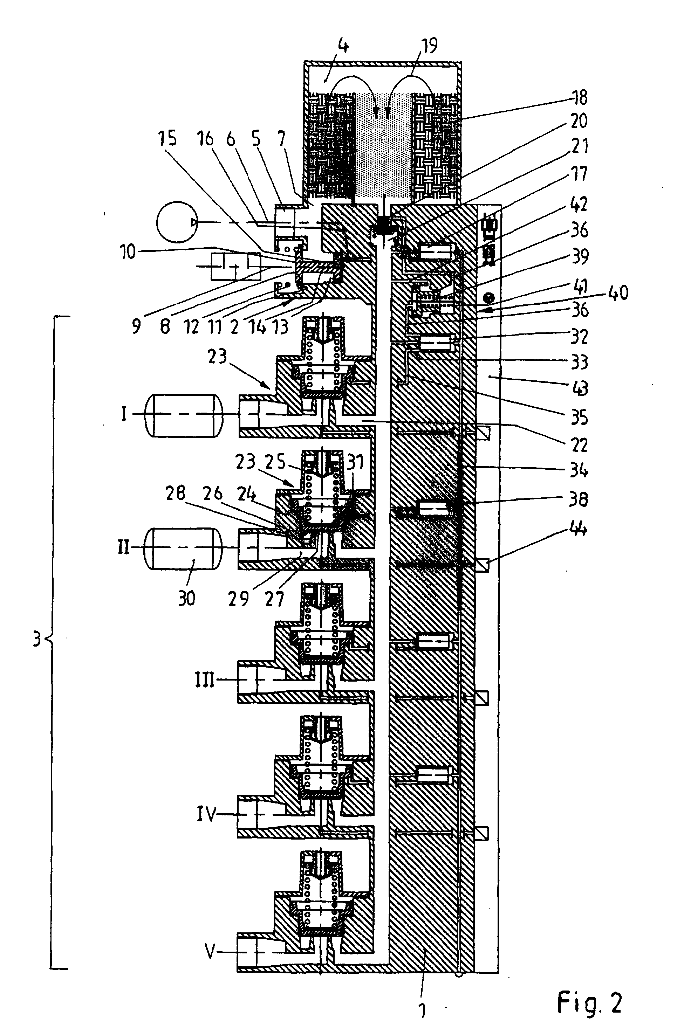

Die in Fig. 2 dargestellte Ausführungsform der Druckluftaufbereitungseinrichtung ist in weiten Bereichen ähnlich ausgebildet wie die Ausführungsform in Fig. 1, so dass auf die zugehörige Beschreibung verwiesen werden kann. Unterschiedlich ist lediglich, dass dem Betriebsbremskreis II ein eigenes Magnetventil 38 zugeordnet ist. Das gemeinsame Magnetventil 32 ist hier lediglich dem Betriebsbremskreis I sowie der Regeneration zugeordnet. In der Regenerationsleitung 36 ist anstelle des Rückschlagventils 37 ein Relaisventil 39 angeordnet. Das Relaisventil 39 weist einen Steuerkolben 40 auf, der auf einer Feder 41 abgestützt ist. Durch die Kraft der Feder 41, die auch einstellbar ausgebildet sein kann, wird ein Mindestdruck festgelegt, so dass das Relaisventil 39 erst bei Überschreiten dieses Mindestdruckes anspricht. Von dem Einströmraum 21 führt eine Leitung 42 zu diesem Relaisventil 39. Bei dieser Ausführungsform führt die Steuerleitung 35 zu der dritten Wirkfläche 31 des Überströmventils 23 des Betriebsbremskreises I. Auch hier ist das gemeinsame Magnetventil 32 ein solches, welches in stromlosem Zustand geschlossen ist. Die Wirkfläche 31 befindet sich auf der Anströmseite des Stufenkolbens 24 des Überströmventils 23, so dass das Überströmventil 23 durch Erregung des Magnetventils 32 direkt angesteuert wird. Für die Ansteuerung des Magnetventils 32, des Magnetventils 17 sowie des Magnetventils 38 und weiterer Magnetventile ist eine gemeinsame elektronische Steuereinrichtung 43 vorgesehen. Jedem Kreis I, II, III und IV ist ein Druckspannungswandler 44 zugeordnet, dessen Signal den in dem jeweiligen Kreis herrschenden Druck wiedergibt und zu der elektronischen Steuereinrichtung 43 geführt wird, wo die entsprechende Verarbeitung stattfindet.

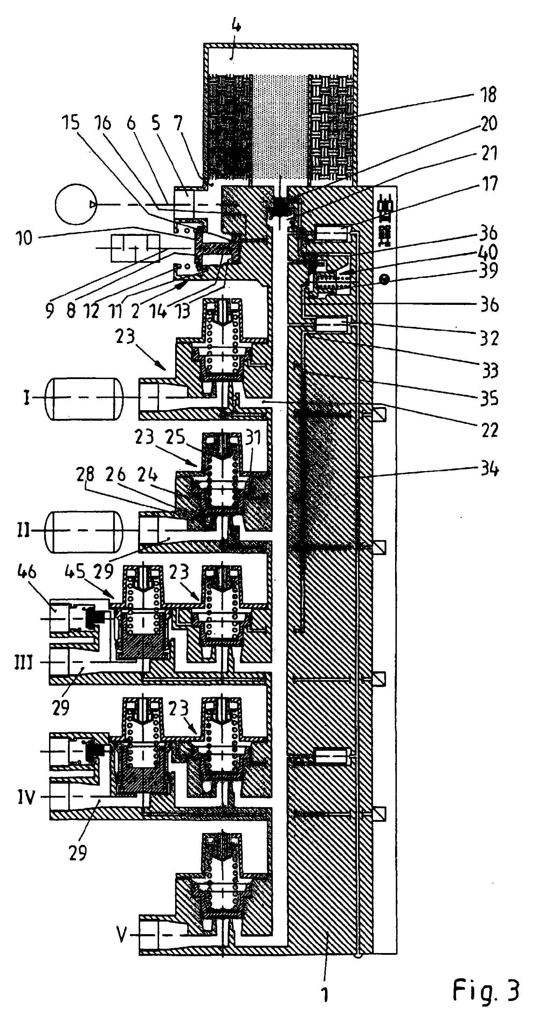

Die in Fig. 3 dargestellte Ausführungsform der Druckluftaufbereitungseinrichtung baut auf den Ausführungsformen der Fig. 1 und 2 auf. Das gemeinsame Magnetventil 32 dient hier zu Ansteuerung der Überströmventile 23 der Kreise I, II und III und der Ansteuerung einer Regenerationsphase, wobei auch hier in der Regenerationsleitung 36 das Relaisventil 39 angeordnet ist, welches in Verbindung mit Fig. 2 bereits beschrieben wurde. Im Bremskreis III ist dem Überströmventil 23 ein Druckbegrenzer 45 nachgeschaltet. Stromab des Druckbegrenzers 45 ist ein Anschluss 46 vorgesehen, von dem eine nicht dargestellte Leitung zu der Federspeicherbremse des Zugfahrzeugs führt. Eine ähnliche Konfiguration ist an dem Bremskreis IV verwirklicht.

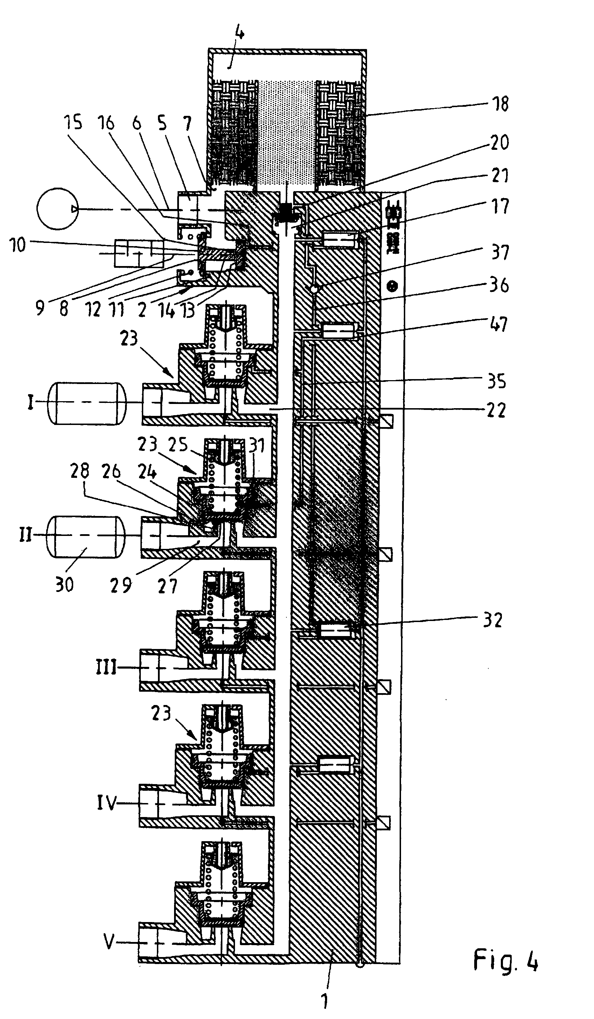

Die Ausführungsform gemäß Fig. 4 greift hinsichtlich der Ausbildung der Regenerationsleitung 36 auf die Ausführungsform der Fig. 1 zurück. Das gemeinsame Magnetventil 32 dient hier zur Ansteuerung des Überströmventils 23 des Kreises III sowie zur Regeneration. Es versteht sich, dass für die Ansteuerung der Überströmventile 23 der Betriebsbremskreise I und II ein weiteres separates Magnetventil 47 vorgesehen ist.

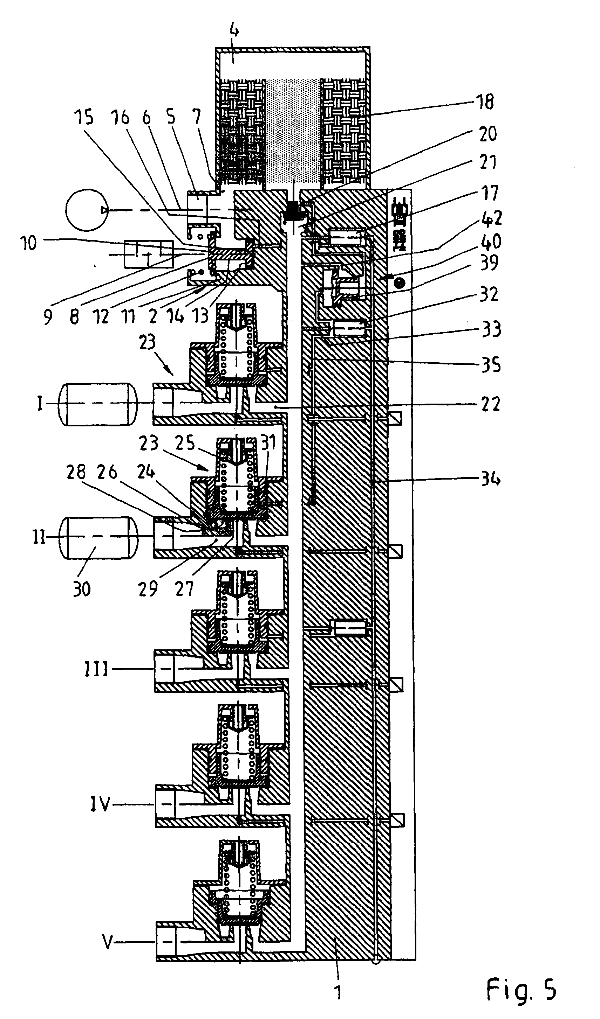

Auch die Ausführungsform gemäß Fig. 5 weist das gemeinsame Magnetventil 32 auf. Dieses Magnetventil 32 ist hier stromlos geöffnet, wie in Fig. 5 dargestellt. Demzufolge verbindet es in diesem Zustand die Leitung 33 mit der Steuerleitung 35 zu den Überströmventilen 23 der Kreise I und II. Die dritte Wirkfläche 31 ist hier abströmseitig an dem Stufenkolben 24 des Überströmventils vorgesehen, so dass die beiden Überströmventile 23 indirekt beaufschlagt werden. Eine Entlüftung der Wirkfläche 31 beim Erregen des Magnetventils 32 führt zu einem Öffnungsvorgang an dem Überströmventil 23. Die Regeneration wird auch hier über das Umschalten des Magnetventils 32 bewirkt. Bei Erregen des Magnetventils 32 wird das Relaisventil 39 entlüftet, so dass in der Folge die Leitung 42 mit dem von dem Relaisventil 39 abzweigenden Teil der Regenerationsleitung 36 verbunden wird, die zum Trockner 4 zurückgeführt ist.

### BEZUGSZEICHENLISTE

- 1 -: Gehäuse
- 2 -: Druckregler
- 3 -: Mehrkreisschutvent:
- 4 -: Trockner
- 5 -: Eingangsanschluss
- 6 -: Leitung
- 7 -: Durchtrittsraum
- 8 -: Auslassventil
- 9 -: Auslass
- 10 -: Ventilkörper
- 11 -: Rand
- 12 -: Feder
- 13 -: Kolben
- 14 -: Stößel
- 15 -: Druckkammer
- 16 -: Leitung
- 17 -: Magnetventil
- 18 -: Granulatraum
- 19 -: Pfeil
- 20 -: Rückschlagventil
- 21 -: Einströmraum
- 22 -: Verbindungsleitung
- 23 -: Überströmventil
- 24 -: Stufenkolben
- 25 -: Feder
- 26 -: Wirkfläche
- 27 -: Wirkfläche
- 28 -: Rand
- 29 -: Leitung
- 30 -: Vorratsbehälter
- 31 -: Wirkfläche
- 32 -: Magnetventil
- 33 -: Leitung
- 34 -: Entlüftungsleitung
- 35 -: Steuerleitung
- 36 -: Regenerationsleitung
- 37 -: Rückschlagventil
- 38 -: Magnetventil
- 39 -: Relaisventil
- 40 -: Steuerkolben
- 41 -: Feder
- 42 -: Leitung
- 43 -: elektronische Steuereinrichtung
- 44 -: Druck-/Spannungswandler
- 45 -: Druckbegrenzer
- 46 -: Anschluss
- 47 -: Magnetventil

## Patentansprüche

1. Druckluftaufbereitungseinrichtung mit einem Druckregler (2) mit Auslassventil (8), einem Lufttrockner (4) und einem Mehrkreisschutzventil (3), das für jeden Kreis ein Überströmventil (23) mit begrenzter Rückströmung aufweist, und mit mindestens einem Magnetventil zum willkürlichen Betätigen des Überströmventils, **dadurch gekennzeichnet, dass** das Magnetventil (32) zum willkürlichen Betätigen des Überströmventils (23) zugleich als Steuerventil für die Steuerung einer Regenerationsphase ausgebildet ist und dass eine zum Auslassventil (8) führende Regenerationsleitung (36) an das Magnetventil (32) angeschlossen ist.

2. Druckluftaufbereitungseinrichtung nach Anspruch 1, **dadurch gekennzeichnet, dass** das Magnetventil (32) zur direkten Steuerung der Regeneration über die Regenerationsleitung (36) ausgebildet ist und in der Regenerationsleitung nur ein in Regenerationsrichtung öffnendes Rückschlagventil (37) angeordnet ist.

3. Druckluftaufbereitungseinrichtung nach Anspruch 1, **dadurch gekennzeichnet, dass** das Magnetventil (32) zur indirekten Steuerung der Regeneration über die Regenerationsleitung (36) ausgebildet ist und in der Regenerationsleitung (36) ein Relaisventil (39) angeordnet ist.

4. Druckluftaufbereitungseinrichtung nach Anspruch 2 oder 3, **dadurch gekennzeichnet, dass** das Magnetventil (32) stromlos geschlossen ausgebildet ist und die Wirkfläche (31) an dem Überströmventil (23) auf der Anströmseite vorgesehen ist.

5. Druckluftaufbereitungseinrichtung nach Anspruch 2 oder 3, **dadurch gekennzeichnet, dass** das Magnetventil (32) stromlos offen ausgebildet ist und dass die Wirkfläche (31) am Überströmventil (23) auf der dem Federraum zugekehrten Seite vorgesehen ist.

6. Druckluftaufbereitungseinrichtung nach Anspruch 1, **dadurch gekennzeichnet, dass** das Magnetventil (32) zur Ansteuerung der beiden Überströmventile (23) der Kreise I und II der Betriebsbremse und zur Ansteuerung der Regeneration ausgebildet ist.

7. Druckluftaufbereitungseinrichtung nach Anspruch 1, **dadurch gekennzeichnet, dass** das Magnetventil (32) zur Ansteuerung eines Überströmventils eines nachrangigen Kreises III und/oder IV und zur Ansteuerung der Regeneration ausgebildet ist.

8. Druckluftaufbereitungseinrichtung nach Anspruch 6 oder 7, **dadurch gekennzeichnet, dass** die von dem Magnetventil (32) angesteuerte Wirkfläche (31) an den beiden Überströmventilen (23) anströmseitig angeordnet ist, und dass in der Regenerationsleitung (36) ein Relaisventil (39) angeordnet ist.

9. Druckluftaufbereitungseinrichtung nach Anspruch 6 oder 7, **dadurch gekennzeichnet, dass** die von dem Magnetventil (32) angesteuerte Wirkfläche (31) an den beiden Überströmventilen (23) abströmseitig angeordnet ist, und dass in der Regenerationsleitung (36) ein Relaisventil (39) angeordnet ist.

10. Druckluftaufbereitungseinrichtung nach Anspruch 1, 3 oder 6, **dadurch gekennzeichnet, dass** das Relaisventil (39) einen auf einer Feder (41) abgestützten Steuerkolben (40) aufweist, so dass das Relaisventil (39) erst bei Überschreiten eines über die Feder (41) festgelegten Mindestdruckes schaltet.

## Claims

1. Compressed air processing apparatus comprising a pressure controller (2) including an outlet valve (8), an air dryer (4) and a multi circuit protection valve (3) including a plurality of overflow valves (23), each of the overflow valves having limited backflow and being associated with one of the circuits, and at least one solenoid valve being designed and arranged to arbitrarily operate the overflow valve (23), **characterized in that** the solenoid valve (32) being designed and arranged to arbitrarily operate the overflow valve (23) is also designed and arranged to be a control valve to control a regeneration phase and **in that** a regeneration conduit (36) is designed and arranged to connect the solenoid valve (32) to the outlet valve (8).

2. Compressed air processing apparatus of claim 1, **characterized in that** the solenoid valve (32) is designed and arranged to directly control the regeneration via the regeneration conduit (36) and a check valve (37) is arranged in the regeneration conduit and being designed and arranged to open in the regeneration direction.

3. Compressed air processing apparatus of claim 1, **characterized in that** the solenoid valve (32) is designed and arranged to indirectly control the regeneration via the regeneration conduit (36) and a relay valve (39) is arranged in the regeneration conduit (36).

4. Compressed air processing apparatus of claim 2 or 3, **characterized in that** the solenoid valve (32) is designed and arranged to be closed in a currentless condition, and the effective surface (31) of the overflow valve (23) is arranged at the upstream side of the overflow valve.

5. Compressed air processing apparatus of claim 2 or 3, **characterized in that** the solenoid valve (32) is designed and arranged to be opened in a currentless condition, and the effective surface (31) of the overflow valve (23) is arranged at a side of the overflow valve facing the spring chamber.

6. Compressed air processing apparatus of claim 1, **characterized in that** the solenoid valve (32) is designed and arranged to control the two overflow valves (23) being associated with the circuits I and II of the service brake and to control the regeneration.

7. Compressed air processing apparatus of claim 1, **characterized in that** the solenoid valve (32) being designed and arranged to control an overflow valve being associated with a less important circuit III and/or IV and to control the regeneration.

8. Compressed air processing apparatus of claim 6 or 7, **characterized in that** the effective surface (31) of both of the overflow valves (23) being controlled by the solenoid valve (32) is arranged at the upstream side of the overflow valves (23) and **in that** a relay valve (39) is arranged in the regeneration conduit (36).

9. Compressed air processing apparatus of claim 6 or 7, **characterized in that** the effective surface (31) of both of the overflow valves (23) being controlled by the solenoid valve (32) is arranged at the downstream side of the overflow valves (23) and **in that** a relay valve (39) is arranged in the regeneration conduit (36).

10. Compressed air processing apparatus of claim 1, 3 or 6, **characterized in that** the relay valve (39) includes a control piston (40) being supported on a spring (41), the relay valve (39) being designed and arranged to switch after having exceeded a minimum pressure being defined by the spring (41).

## Revendications

1. Dispositif de production d'air comprimé comportant un régulateur de pression (2) avec soupape d'échappement (8), un séchoir d'air (4) et une soupape de protection multicircuit (3) qui comporte pour chaque circuit une soupape de trop-plein (23) avec reflux limité, et comportant au moins une soupape magnétique pour l'actionnement volontaire de la soupape de trop-plein, **caractérisé en ce que** la soupape magnétique (32) est conçue en même temps pour la commande d'une phase de régénération et **en ce qu'**une conduite de régénération (36) menant à la soupape d'échappement (8) est raccordée à la soupape magnétique (32).

2. Dispositif de production d'air comprimé selon la revendication 1, **caractérisé en ce que** la soupape magnétique (32) est conçue pour la commande directe de la régénération par la conduite de régénération (36) et dans la conduite de régénération est disposé un seul clapet de non-retour (37) s'ouvrant dans le sens de la régénération .

3. Dispositif de production d'air comprimé selon la revendication 1, **caractérisé en ce que** la soupape magnétique (32) est conçue pour la commande indirecte de la régénération par la conduite de régénération (36) et dans la conduite de régénération est disposée une soupape de relais (39).

4. Dispositif de production d'air comprimé selon la revendication 2 ou 3, **caractérisé en ce que** la soupape magnétique (32) est conçue fermée lorsqu'elle n'est pas parcourue par un courant et la surface active (31) de la soupape de trop-plein (23) est prévue sur son côté amont.

5. Dispositif de production d'air comprimé selon la revendication 2 ou 3, **caractérisé en ce que** la soupape magnétique (32) est conçue ouverte lorsqu'elle n'est pas parcourue par un courant et **en ce que** la surface active (31) de la soupape de trop-plein (23) est prévue sur son côté tourné vers la chambre du ressort.

6. Dispositif de production d'air comprimé selon la revendication 1, **caractérisé en ce que** la soupape magnétique (32) est conçue pour la commande des deux soupapes de trop-plein (23) des circuits I et II du frein de service et pour la commande de la régénération.

7. Dispositif de production d'air comprimé selon la revendication 1, **caractérisé en ce que** la soupape magnétique (32) est conçue pour la commande d'une soupape de trop-plein d'un circuit III et/ou IV de rang inférieur et pour la commande de la régénération.

8. Dispositif de production d'air comprimé selon la revendication 6 ou 7, **caractérisé en ce que** la surface active (31) commandée par la soupape magnétique (32) est disposée côté amont sur les deux soupapes de trop-plein (23), et **en ce qu'**une soupape de relais (39) est disposée dans la conduite de régénération (36).

9. Dispositif de production d'air comprimé selon la revendication 6 ou 7, **caractérisé en ce que** la surface active (31) commandée par la soupape magnétique (32) est disposée côté aval sur les deux soupapes de trop-plein (23), et **en ce qu'**une soupape de relais (39) est disposée dans la conduite de régénération (36).

10. Dispositif de production d'air comprimé selon la revendication 1, 3 ou 6, **caractérisé en ce que** la soupape de relais (39) comporte un piston de commande (40) en appui contre un ressort (41), de sorte que la soupape de relais (39) ne commute qu'en cas de dépassement d'une pression minimale définie par le ressort (41).
